Europäisches Patentamt

European Patent Office

Office européen des brevets

(19)

(11) Veröffentlichungsnummer: **0 211 250 B1**

# (12) EUROPÄISCHE PATENTSCHRIFT

(45) Veröffentlichungstag der Patentschrift: **19.06.91**

(51) Int. Cl.⁵: **C08J 9/14**

(21) Anmeldenummer: **86109202.1**

(22) Anmeldetag: **05.07.86**

(54) **Nucleierungsmittel als Porenregler zur Herstellung direktbegaster Thermoplastschäume.**

(30) Priorität: **11.07.85 DE 3524704**

(43) Veröffentlichungstag der Anmeldung:
**25.02.87 Patentblatt 87/09**

(45) Bekanntmachung des Hinweises auf die
Patenterteilung:
**19.06.91 Patentblatt 91/25**

(84) Benannte Vertragsstaaten:
**AT BE CH DE FR GB IT LI LU NL SE**

(56) Entgegenhaltungen:
**EP-A- 0 059 495**
**DE-A- 1 569 219**
**US-A- 3 444 283**

**CHEMICAL ABSTRACTS, Band 88, Nr. 14, Zu-**
**sammenfassung Nr. 90726k; & JP-A-52 121**
**669 (SEKISUI KASEIHIN KOGYO K.K.)**
**13-10-1977**

(73) Patentinhaber: **BOEHRINGER INGELHEIM KG**
**Postfach 200**
**W-6507 Ingelheim am Rhein(DE)BE CH DE FR**
**IT LI LU NL SE AT**

Patentinhaber: **BOEHRINGER INGELHEIM IN-**
**TERNATIONAL GmbH**
**Postfach 20**
**W-6507 Ingelheim am Rhein(DE)GB**

(72) Erfinder: **Kretzschmann, Günther**
**Berliner Strasse 17**
**W-6531 Münster-Sarmsheim(DE)**
Erfinder: **Scholz, Dieter**
**Im Brühl**
**W-6535 Gau-Algesheim(DE)**
Erfinder: **Hilgert, Karl-Heinz**
**Hausgartenstrasse 19**
**W-6507 Ingelheim am Rhein(DE)**

**Beschreibung**

Die Erfindung betrifft ein neues Nucleierungsmittel (Porenregler) zur Herstellung direktbegaster Thermoplastschäume.

Es ist bekannt, zur Herstellung von Strukturschäumen dem thermoplastischen Material physikalisch wirkende Treibmittel (d.h. Treibmittel deren Siedetemperatur unterhalb der Verarbeitungstemeratur des Kunststoffes liegt) zuzusetzen. Zur Steuerung der Zellstruktur werden Nucleierungsmittel als Porenregler verwendet. Eines der am häufigsten gebrauchten Nucleierungsmittel ist Talkum, welches in der Regel in 1,0 bis 2,5 % dem thermoplastischen Material zudosiert wird. Die Verwendung von Talkum oder anderen sich nicht zersetzenden Porenreglern als sog. "passives Nucleierungsmittel" hat den Nachteil, daß bei der Wiederverwendung von Abfallprodukten aus der Kunststoffverarbeitung - dem Regenerat - stets das "passive Nucleierungsmittel" erneut in den Prozeß zurückgeführt wird, wobei die Nucleierungswirkung des unzersetzten Porenreglers aus dem Regenerat nur schwer eingeschätzt werden kann.

In Chem. Abstr. Bd. 88, Nr. 90726 k bzw. JP-A 52/121669 ist eine Formmasse beschrieben worden, bei der auf 100 Teile eines thermoplastischen Materials aus Polystyrol und Ethylenvinylacetat-Copolymerisat und 0,1 Teile Polybuten 0,8 Teile eines Gemischs aus 0,1 Teilen Zitronensäure, 0,2 Teilen Natriumbicarbonat und 0,5 Teilen Talkum als Nucleierungsmittel verwendet werden. Überraschenderweise kann mit näherungsweise der halben Menge Nucleierungsmittel gemäß der Erfindung eine gleich gute Wirkung erzielt werden.

Wenn dem Kunststoff Feststoffe - wie Talkum - in Konzentrationen über etwa 1 % beigemischt werden, wird die Qualität des Kunststoffes insbesondere Farbe, Struktur und Glanz beeinflußt.

Daher gewinnen sog. "aktive Nucleierungsmittel" zunehmend an Bedeutung. "Aktive Nucleierungsmittel" sind Porenregler, die sich während des Extrusions- oder Spritzgußverfahrens zersetzen; das Regenerat enthält dann keine - oder zumindest weniger - nucleierend wirkenden Bestandteile und kann ohne wesentlichen Qualitätsverlust wiederverwendet werden.

Hervorzuheben sind Kohlendioxid abspaltende Systeme, von denen Natriumbicarbonat oder Citronensäureester (DE-OS 34 11 319) oder die Kombination von Citronensäure oder Natriumcitrat mit Natriumbicarbonat oder Natriumcarbonat (Jap. Pat. 715 375) beschrieben sind. Das System Citronensäure/Natriumbicarbonat ist in 0,4 - 1,0 % Zuschlag als Porenregler wirksam.

Es wurde nun gefunden, daß ein Mittel zur Nucleierung direktbegaster Thermoplastschäume, das aus Mononatriumcitrat (A) und Natriumbicarbonat (B) in annähernd stöchiometrischem Verhältnis und Talkum (C) besteht, besonders günstige Eigenschaften aufweist.

Die beiden Komponenten A und B stellen aktive Nucleierungsmittel (Treibmittel) dar, während Komponente C ein passives Nucleierungsmittel ist.

Durch Verwendung der Citronensäurekomponente und der Bicarbonatkomponente in stöchiometrischem oder annähernd stöchiometrischem Verhältnis wird die optimale Menge an Kohlendioxid freigesetzt.

Als Talkum können die handelsüblichen Talkumqualitäten verwendet werden. Bevorzugt sind Talkumqualitäten, die auch für die pharmazeutische Fertigung eingesetzt werden, weil hier keine lebensmittelrechtlichen Bedenken bezüglich der Qualität des Materials bestehen. Insbesondere ist hervorzuheben, daß diese Talkumqualitäten keine lungenschädlichen Mineralfaseranteile enthalten.

Der erfindungsgemäßen Mischung können die üblichen Mittel zur Verbesserung der Fließfähigkeit oder Gleit- oder Trennmittel beigemischt werden.

Derartige Zusatzstoffe sind allgemein bekannter Stand der Technik. Zu nennen sind Metallseifen, wie Calcium-, Magnesium- oder Zinkstearat ; Paraffine; Silikate, wie Aerosil; Silicone; Wachse; Fette.

Geeignete Thermoplaste sind:
Polyethylene; Ethylen-Vinylacetat-Copolymerisate; Ethylen-Ethylacrylate-Copolymerisate; ionomere Polyethylene; Polypropylene; Polybutene; Polymethylpentene; Polystyrole; schlagfeste Polystyrole; Styrol-Acrylnitril-Copolymerisate; Acryl-Butadien-Styrol-Copolymerisate; ASA (Acrylnitril-styrylacrylester)-Copolymerisate Polyvinylcarbazole; Polyvinylchloride; Polytrifluorethylene; Polytetrafluorethylen; Polyperflouorpropylene; Polyvinylidenfluoride; Ethylen-Tetrafluorethylen-Copolymerisate; Polymethylmethacrylate; Polyamide; Polyethylenglycolterephthalate; Polybutylenterephthalate; Polymethylene;
Polycarbonate; Chlorierte Polyether; Phenoxy-Harze; Polyphenylenoxide; Polysulfone; Polyethersulfone; Polyphenylensulfide; Polyurethan-Elastomere; Celluloseacetate; Cellulosepropionate; Cellulose-Aceto-Butyrate und andere Thermoplaste oder Elastomere.

Die drei Komponenten des erfindungsgemäßen Mittels können als feinvermahlenes freifließendes Pulver abgemischt werden. Es ist auch möglich, die Mischung nach üblichen Verfahren zu überziehen (hydrophobieren) oder zu verkapseln, wobei entweder alle drei Komonenten gemeinsam verkapselt, überzogen oder hydrophobiert werden oder aber eine oder zwei Komponenten zunächst verkapselt überzogen oder hydrophobiert und die restlichen Komponenten dann zugemischt werden.

Zur Verkapselung, zum Überziehen oder Hydrophobieren sind zahlreiche Stoffe geeignet. Bevorzugt sind solche Stoffe, die bei den bei Thermoplastschmelzen üblichen Temperaturen schmelzen oder bereits geschmolzen, bei Raumtemperatur aber fest oder wachsartig erstarrt sind.

Neben den zahlreichen Wachsen sind Fettsäuren und deren Ester und Salze bevorzugt zu nennen; besonders geeignet ist Calciumstearat, bzw. Magnesiumstearat, sowie Fettsäureglyceride.

Dabei erweist es sich als vorteilhaft, wenn zunächst Natriumbicarbonat allein und/oder die Citronensäure allein mit Calciumstearat bzw. Fettsäureestern hydrophobiert wird, weil derartige Mischungen besonders gut gegen Luftfeuchtigkeit stabilisiert sind und selbst bei langer Lagerung nicht klumpen, oder sich zersetzen.

Das Verhältnis von Talkum (C) zu den beiden anderen Komponenten (A + B) kann in den Grenzen (C) : (A + B) von 1 : 9 bis 9 : 1 frei gewählt werden. Bevorzugt ist der Bereich (C) : (A + B) von 1 : 1 bis 4 : 1.

Beispiel 1

Herstellung direktbegaster Polystyrol-Strukturschaumfolien

Die Versuche werden mit einer Berstoff-Tandem Anlage durchgeführt. Als Treibmittel werden 5-7 % eines 1:1-Gemisches aus Trichlormonofluormethan und Dichlordifluormethan eingesetzt. Als thermoplastisches Material wird technisches-Polystyrol (Typ DOW 648) verwendet.

Die Mengenangaben des Treibmittels und des Nucleierungsmittels beziehen sich auf die Menge des eingesetzten Polystyrols, dabei wird - bei konstantem Treibmittelzusatz - die Dosierung des Nucleierungsmittels so lange variiert, bis Polystyrolfolien annähernd gleicher Zellstruktur erhalten werden. Als Standard dient dabei die in Versuch 1 beschriebene Folie.

Versuch 1 (Stand der Technik) Polystyrol: Polystyrol Typ Styron 648 (von Dow Chemicals)
Nucleierungsmittel: 1,7 % Talkum
Ergebnis: gleichmäßige Struktur, Folie schimmert leicht gelblich

Versuch 2 (Stand der Technik) Polystyrol: Polystyrol Typ Styron 648
Nucleierungsmittel: 0,45 % einer Mischung aus Mononatriumcitrat und Natriumbicarbonat (entsprechend Jap. Pat. 715 375)
Ergebnis: feine gleichmäßige Struktur

Versuch 3 (erfindungsgemäß) Polystyrol: Polystyrol Dow 648
Nucleierungsmittel: 0,35 % Talkum 0,09 % einer Mischung aus Mononatriumcitrat und Natriumhydrogencarbonat (entsprechend Jap. Pat. 715 375)
Ergebnis: feine gleichmäßige Struktur, Poren feiner als bei Versuch 1

Die als Anlage 1 und 2 eingereichten elektromikroskopischen Aufnahmen sind Schnitte jeweils längs und quer zur Extrusionsrichtung der Schaumfolie und belegen die Verbesserung der Porenqualität

Beispiele 4 - 6

Direkte Begasung von LDPE (Low Density Polyethylene)
Einschneckenextruder mit Begasungseinrichtung, Ringdüse (übliche Ausführung für Shaumfolienherstellung). LDPE: Dichte ca. 0,918
Schmelzindex ca. 2
Gas: Frigen® 114

Gasmenge: 4 - 5 %

Schaumdichte: 0,3 - 0,4 g /ml

Versuch 4: (Stand der Technik)
LDPE: siehe oben
Nucleierungsmittel: 0,6 - 0,8 % Talkum
Ergebnis: gleichmäßige Schaumstruktur, Farbe grau-gelblich

Versuch 5 (Stand der Technik)
LDPE: siehe oben
Nucleierungsmittel: 0,3 - 0,4 % analog Versuch 2
Ergebnis: gleichmäßige feine Struktur, Farbe heller als Versuch 4

Versuch 6:
LDPE: siehe oben
Nucleierungsmittel: 0,25 - 0,4 % analog Versuch 3
Ergebnis: gleichmäßige feine Struktur, Farbe heller als Versuch 4

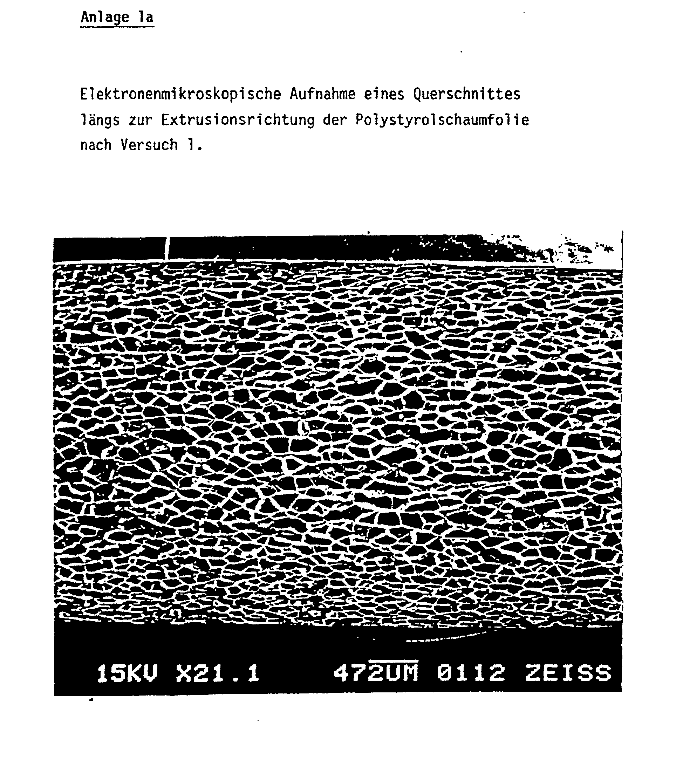

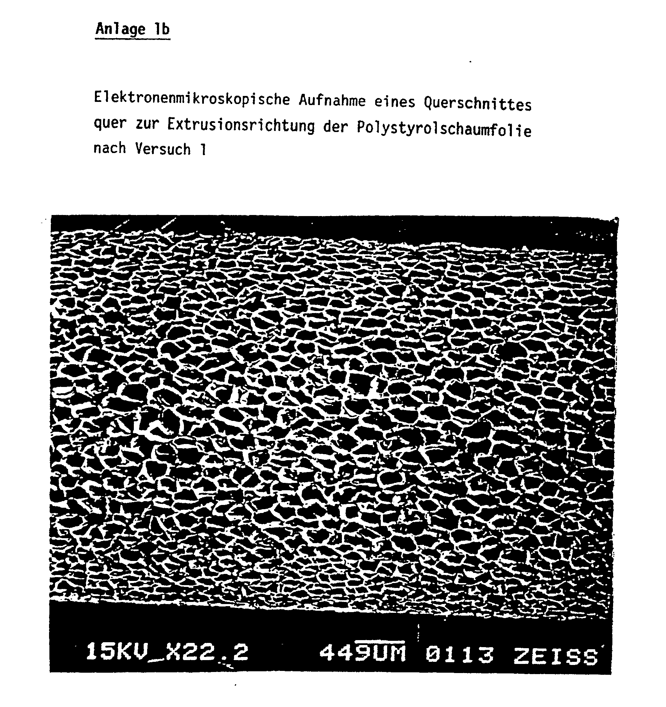

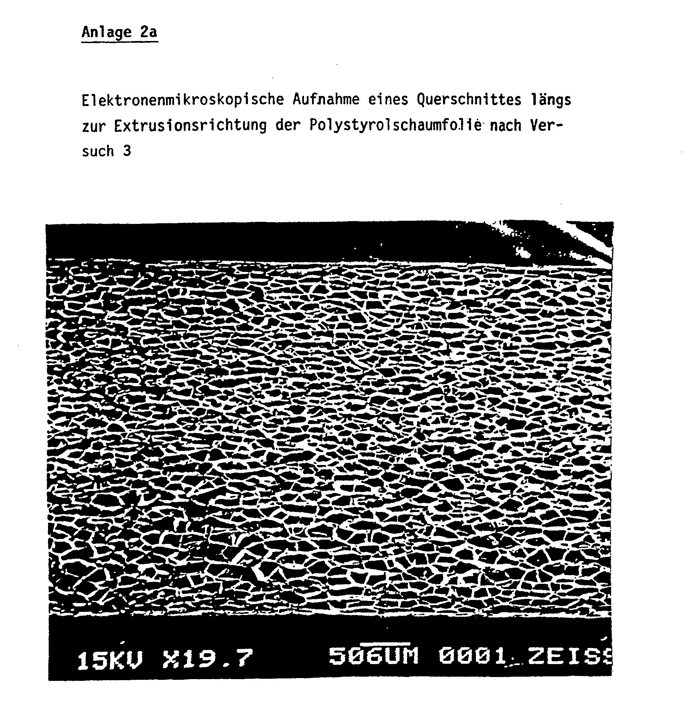

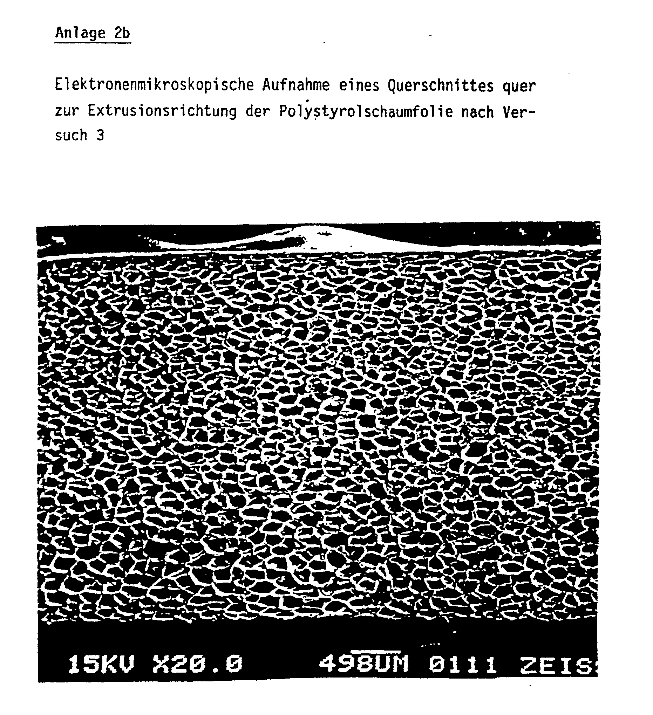

**Ansprüche**

1. Mittel zur Nucleierung direktbegaster Thermoplastschäume, umfassend Mononatriumcitrat, Natriumbicarbonat und Talkum, wobei Mononatriumcitrat und Natriumbicarbonat in stöchiometrischem oder annähernd stöchiometrischem Verhältnis stehen.

2. Mittel nach Anspruch 1, dadurch gekennzeichnet, daß das Verhältnis von Talkum zur Mischung aus Mononatriumcitrat und Natriumbicarbonat 1 : 9 bis 9 : 1 beträgt.

3. Mittel nach Anspruch 2, dadurch gekennzeichnet, daß das Verhältnis von Talkum zur Mischung von Mononatriumcitrat und Natriumbicarbonat 1 : 1 bis 4 : 1 beträgt.

## Claims

1. Agent for nucleating directly gassed thermoplastic foams, comprising monosodium citrate, sodium bicarbonate and talc, in which the monosodium citrate and sodium bicarbonate are present in a stoichiometric or substantially stoichiometric ratio.

2. Agent according to claim 1, characterised in that the ratio of talc to the mixture of monosodium citrate and sodium bicarbonate is from 1:9 to 9:1.

3. Agent according to claim 2, characterised in that the ratio of talc to the mixture of monosodium citrate and sodium bicarbonate is from 1:1 to 4:1.

## Revendications

1. Agent pour la nucléation de mousses thermoplastiques par incorporation directe de gaz, comprenant du citrate monosodique, du bicarbonate de sodium et du talc, dans lequel le citrate monosodique et le bicarbonate de sodium sont dans un rapport stoechiométrique ou approximativement stoechiométrique.

2. Agent selon la revendication 1, caractérisé en ce que le rapport du talc au mélange de citrate monosodique et de bicarbonate de sodium et de 1 : 9 à 9 : 1.

3. Agent selon la revendication 2, caractérisé en ce que le rapport du talc au mélange du citrate monosodique et du bicarbonate de sodium est de 1 : 1 à 4 : 1.

Anlage 1a

Elektronenmikroskopische Aufnahme eines Querschnittes längs zur Extrusionsrichtung der Polystyrolschaumfolie nach Versuch 1.

15KV X21.1     472UM 0112 ZEISS

### Anlage 1b

Elektronenmikroskopische Aufnahme eines Querschnittes quer zur Extrusionsrichtung der Polystyrolschaumfolie nach Versuch 1

Anlage 2a

Elektronenmikroskopische Aufnahme eines Querschnittes längs
zur Extrusionsrichtung der Polystyrolschaumfolie nach Versuch 3

15KV X19.7    506UM 0001 ZEIS

Anlage 2b

Elektronenmikroskopische Aufnahme eines Querschnittes quer
zur Extrusionsrichtung der Polystyrolschaumfolie nach Versuch 3

15KV X20.0    498UM 0111 ZEIS